# EUROPEAN PATENT APPLICATION

(11) **EP 3 388 279 A2**
(43) Date of publication of application: **17.10.2018**
(21) Application number: 18165137.3
(22) Date of filing: 29.03.2018
(51) Int. Cl.: B60L 11/18

(54) **SYSTEMS AND METHODS TO IMPROVE PERFORMANCE OF AN ELECTRIC VEHICLE**

(30) Priority: 12.04.2017 US 201715485772
(71) Applicant: Proterra Inc., Greenville SC 29607 (US)
(72) Inventor: Pevear, Brian J., San Mateo, CA 94402 (US); Clippard, Robert, Greenville, SC 29615 (US); Lai, David, East Palo Alto, CA 94303 (US); Grace, Dustin, San Carlos, CA 94070 (US); Gerber, John, Greer, SC 29650 (US)
(74) Representative: Purdy, Hugh Barry

(57) **Abstract**

A method of controlling an electric vehicle (10) operating on a route, comprises receiving (110) at a first time, at a control unit (70) of the electric vehicle, data indicative of a condition of a stretch of the route that the electric vehicle will traverse at a second time later than the first time, and varying (130) a cooling of a battery system (14) of the electric vehicle, using the control unit, based on the received data.

## Description

### Field of the Invention

The present invention relates to systems and methods for improving the performance of an electric vehicle.

### Background to the Invention

An electric vehicle (EV) uses an electric motor for propulsion. Energy required to power the propulsion motor, and operate the different systems of the EV, is stored in a battery system. When the stored energy decreases, the battery system is recharged. Decreasing the energy consumption of the EV, without sacrificing the performance of the EV, increases the overall efficiency of the EV. Embodiments of the current disclosure provide systems and methods to improve the performance of the EV. The scope of the current disclosure, however, is defined by the attached claims, and not by the ability to solve any specific problem.

### Summary of the Invention

Embodiments of the present disclosure relate to systems and methods for improving the performance of an electric vehicle. Each of the embodiments disclosed herein may include one or more of the features described in connection with any of the other disclosed embodiments.

In one embodiment, a method of controlling an electric vehicle operating on a route is disclosed. The method includes receiving at a first time, at a control unit of the electric vehicle, data indicative of a condition of a stretch of the route that the electric vehicle will traverse at a second time later than the first time. The method further includes varying a cooling of a battery system of the electric vehicle, using the control unit, based on the received data.

In another embodiment, a method of controlling an electric vehicle operating on a route is disclosed. The method includes receiving, at a control unit of the electric vehicle, data indicative of a road grade at a second stretch of the route, when the electric vehicle is traversing a first stretch of the route. The second stretch is a region along the route that the electric vehicle is operating on, and is located ahead of the first stretch. The method also includes varying a cooling of the battery system, using the control unit, based on the received data.

In yet another embodiment, a method of controlling an electric vehicle is disclosed. The method includes charging the electric vehicle using power from a utility grid. The method also includes operating an HVAC system of the electric vehicle, using power from the utility grid, to heat or cool a passenger cabin of the electric vehicle while the electric vehicle is being charged.

In one embodiment, receiving the data includes receiving data indicative of a road grade of the stretch of the route.

In one embodiment, varying a cooling of the battery system includes increasing the cooling if the road grade indicates that the stretch includes an uphill slope.

In one embodiment, varying a cooling of the battery system includes decreasing the cooling of the battery system if the road grade indicates that the stretch includes a downhill slope.

In one embodiment, varying a cooling of the battery system includes heating the battery system based on the received data.

In one embodiment, the method includes a step of further including increasing a regenerative charge acceptance limit of the battery system if the received data indicates that the stretch of the route includes a downhill slope.

In one embodiment, the method includes a step of further including providing instructions to a driver of the electric vehicle, the instructions including driving instructions configured to improve a performance of the electric vehicle as it traverses the stretch of the route.

In one embodiment, varying a cooling of the battery system includes varying the cooling of the battery system at the first time based on the received data.

In one embodiment, receiving the data includes receiving data indicative of a road roughness of the stretch of the route.

In one embodiment, the method includes a step of further including receiving at the first time, data indicative of an expected weather condition at the stretch of the route at the second time.

In one embodiment, the method includes a step of further including receiving at the first time, data indicative of an expected traffic condition at a stretch of the route at the second time, wherein varying a cooling of the battery system includes varying the cooling based on both (a) the data indicative of the condition of the stretch of the route, and (b) the expected weather condition at the stretch of the route.

In one embodiment, varying a cooling of the battery system incudes varying a setpoint temperature of the battery system.

In another aspect, the invention provides a method of controlling an electric vehicle operating on a route, comprising:
receiving, at a control unit of the electric vehicle, data indicative of a road grade at a second stretch of the route, when the electric vehicle is traversing a first stretch of the route, wherein the second stretch is a region along the route that the electric vehicle is operating on, and is located ahead of the first stretch; and
varying a cooling of the battery system, using the control unit, based on the received data.

In one embodiment, the step of varying the cooling includes increasing the cooling if the received data indicates that the second stretch is an uphill slope.

In one embodiment, the step of varying the cooling further includes decreasing the cooling if the received data indicates that the second stretch is a downhill slope.

In one embodiment, the method further includes increasing a regenerative charge acceptance limit of the battery system if the received data indicates that the second stretch is a downhill slope.

In one embodiment, the step of varying the cooling includes changing the cooling of the battery system when the electric vehicle is traversing the first stretch based on the received data.

In one embodiment, the method further includes providing instructions to a driver of the electric vehicle, the instructions including driving instructions configured to improve a performance of the electric vehicle as it traverses the second stretch.

In another aspect., the invention provides a method of controlling an electric vehicle, comprising:
charging the electric vehicle by electrically connecting the vehicle to a utility grid; and
operating an HVAC system of the electric vehicle, using power from the utility grid, to heat or cool a passenger cabin of the electric vehicle while the electric vehicle is being charged.

In one embodiment, the step of operating the HVAC system includes heat or cool the passenger cabin to a preselected temperature using power from the utility grid.

Other aspects and preferred embodiments of the invention are defined and described in the other claims set out below.

### Brief Description of the Figures

The accompanying drawings, which are incorporated in and constitute a part of this specification, illustrate exemplary embodiments of the present disclosure and together with the description, serve to explain the principles of the disclosure.
FIG. 1 illustrates an exemplary electric bus having a battery system;
FIG. 2 is a schematic illustration of an exemplary battery system of the bus of FIG. 1; and
FIG. 3 is a flow chart that illustrates an exemplary method of operating the bus.

### Detailed Description of the Invention

All publications, patents, patent applications and other references mentioned herein are hereby incorporated by reference in their entireties for all purposes as if each individual publication, patent or patent application were specifically and individually indicated to be incorporated by reference and the content thereof recited in full.

### Definitions and general preferences

Where used herein and unless specifically indicated otherwise, the following terms are intended to have the following meanings in addition to any broader (or narrower) meanings the terms might enjoy in the art:
Unless otherwise required by context, the use herein of the singular is to be read to include the plural and *vice versa.* The term "a" or "an" used in relation to an entity is to be read to refer to one or more of that entity. As such, the terms "a" (or "an"), "one or more," and "at least one" are used interchangeably herein.

As used herein, the term "comprise," or variations thereof such as "comprises" or "comprising," are to be read to indicate the inclusion of any recited integer (e.g. a feature, element, characteristic, property, method/process step or limitation) or group of integers (e.g. features, element, characteristics, properties, method/process steps or limitations) but not the exclusion of any other integer or group of integers. Thus, as used herein the term "comprising" is inclusive or open-ended and does not exclude additional, unrecited integers or method/process steps.

The present disclosure describes systems and methods for improving the performance of an electric vehicle. The improved performance may include an improvement in any efficiency or performance related parameter (e.g., energy efficiency, overall efficiency, power output capability, improved traction, battery life, component life, conditioning of battery to improve battery life, passenger comfort, etc.). While principles of the current disclosure are described with reference to a low-floor electric bus, it should be understood that the disclosure is not limited thereto. Rather, the systems and methods of the present disclosure may be used in any electric vehicle (cars, two-wheelers, trains, etc.). In this disclosure, relative terms, such as "about," "substantially," "approximately," etc. are used to indicate a possible variation of ±10% of a stated value.

### Exemplification

The invention will now be described with reference to specific Examples. These are merely exemplary and for illustrative purposes only: they are not intended to be limiting in any way to the scope of the monopoly claimed or to the invention described. These examples constitute the best mode currently contemplated for practicing the invention.

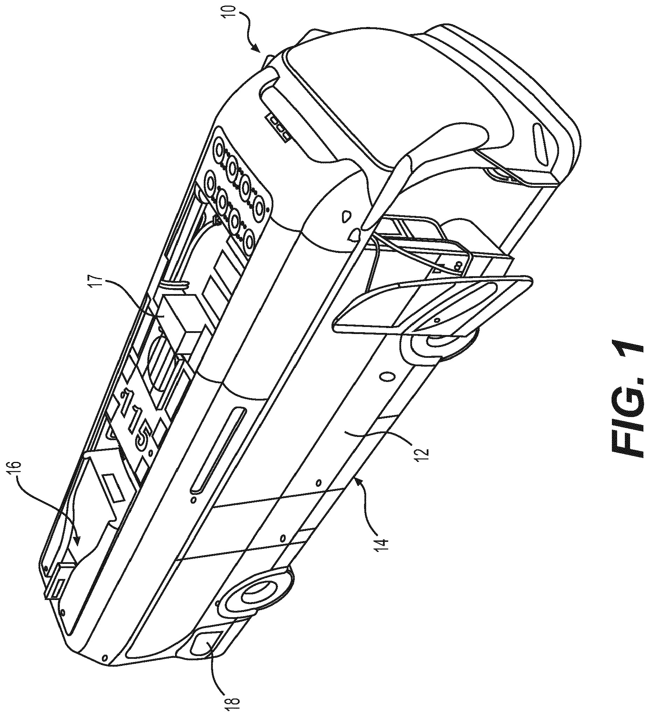

FIG. 1 illustrates an exemplary low-floor electric bus 10. As is known in the art, a low-floor bus 10 is a bus with its floor positioned close to the road surface (e.g., 12-16 inches or 30-40 centimeters) to ease passenger entry and exit. Electric bus 10 includes a body 12 that encloses a passenger cabin. The passenger cabin may be maintained at a preset or desired temperature (TPreset) by an HVAC system 17. Although not a requirement, in some embodiments (as shown in FIG. 1), the HVAC system 17 may be positioned, for example, on the roof of the bus 10. One or more electric motors (not shown) provide power for propulsion of the bus 10. A battery system 14 of the bus 10 stores the electrical energy needed to power the motors and operate the HVAC system 17 (and other power consuming devices/systems, such as, lights, etc.) of the bus 10. When the energy stored in the battery system 14 decreases, it is recharged using power from an external energy source (e.g., utility grid, a bank of batteries, etc.).

The bus 10 may be charged and recharged by several methods. In some embodiments, a charging interface 16 (located, for example, on the roof of bus 10) may be used to charge the bus 10 when the bus 10 is travelling on a route (referred to herein as on-route charging). For example, white travelling on a route, the charging interface 16 may engage with the charge head of a road-side charging station (not shown) to charge the battery system 14. Exemplary methods of on-route charging are described in commonly assigned U.S. Patent Application Publication Nos. US 2013/0193918 A1 and US 2014/0070767 A1, which are incorporated by reference in their entirety herein. In some embodiments, the battery system 14 may be charged by connecting a cable carrying utility grid power to a charge port 18 of the bus 10 when the bus is parked, for example, at a bus depot (referred to herein as shop-charging, depot-charging or merely charging). An exemplary method of depot-charging the bus 10 is described in commonly assigned U.S. Patent Application No. 15/227,163, filed August 3, 2016, which is incorporated by reference in its entirety herein. It is also contemplated, that in some embodiments, the battery system 14 may be charged using wireless technology (such as, e.g., inductive charging).

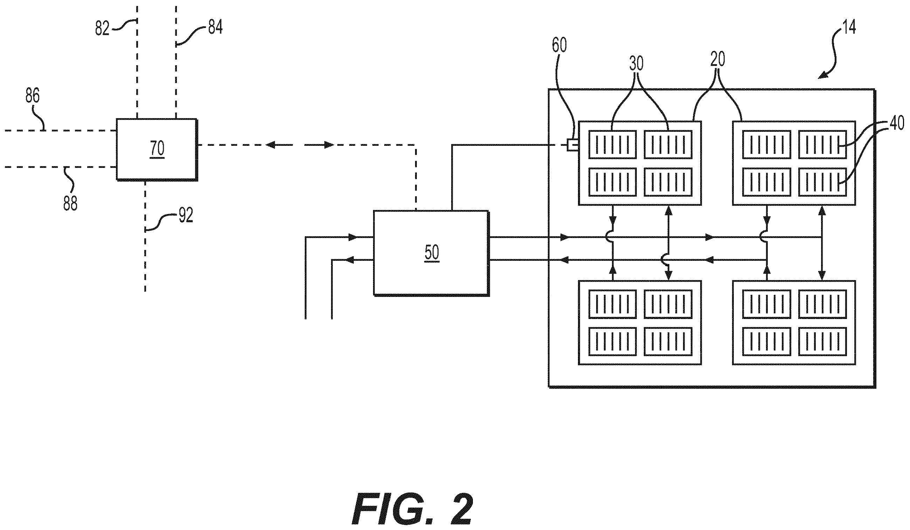

FIG. 2 is a schematic illustration of an exemplary battery system 14 of the bus 10. In some embodiments, the battery system 14 may comprise numerous (tens, hundreds, etc.) battery cells 40 electrically connected together. As known in the art, a battery cell 40 is the smallest self-contained unit that converts chemical energy to electrical energy. In some embodiments, as illustrated in FIG. 2, the battery cells 40 may be arranged in multiple modules 30, that may themselves be arranged in multiple battery packs 20. An exemplary battery system 14 is described in U.S. Patent Application Number 15/341,401, filed November 2, 2016, which is incorporated by reference in its entirety herein. Each battery cell 40 comprises two electrodes (anode and a cathode) with an electrolyte positioned therebetween. The electrodes and the electrolytes may have any known chemistry. In some embodiments, the electrolyte may have a lithium-ion chemistry (e.g., lithium-nickel-cobalt-aluminum (NCA), lithium-nickel-manganese-cobalt (NMC), lithium-manganese-spinel (LMO), lithium titanate (LTO), lithium-iron phosphate (LFP), lithium-cobalt oxide (LCO), etc.). When the two electrodes of a battery cell 40 are connected in a circuit, chemical energy of the electrolyte is converted to electrical energy (or vice versa during charging). Heat is also released during this energy conversion process.

The battery system 14 includes a thermal management (TM) system 50 (heating system, cooling system) to maintain the battery system 14 within a threshold temperature range (ΔT_{Threshold} between T_{Max} and Tₘᵢₙ). For improved efficiency, safety, and life, the bus 10 is operated such that the temperature of its battery system 14 is maintained within the threshold temperature range. One or more temperature sensors 60 may be embedded in the battery system 14 to measure its temperature. When the measured battery temperature exceeds T_{Max}, the TM system 50 operates to cool the battery system 14 by removing heat produced by battery cells 40. And, when battery temperature decreases below T_{Min} (e.g., during cold weather conditions), the TM system 40 may heat the battery cells 40. In some embodiments, the power output of the electric motors, transmission, and other ancillary systems may also be controlled to maintain the battery system 14 within the threshold temperature range. For example, the battery temperature may be decreased by reducing the current discharged from the battery system 14, and thereby reducing the propulsion power produced by the electric motors. Waste heat from the traction system or other ancillary systems may also be used to supplement the heating of the batteries.
[0016] In general, any type of TM system (liquid cooled, air cooled, etc.) may be used in battery system 14. In some embodiments, the TM system 50 may be a liquid cooling system, where a liquid medium (coolant) is circulated through the battery system 14 to heat or cool the battery cells 40. In some embodiments, the TM system 50 may be an air cooled system where an air stream is used to cool the battery cells 40. In some embodiments, the TM system 50 may include both air and liquid cooling. For example, a liquid loop extending through the battery packs 20 may transfer heat from the battery cells 40 to a liquid-air heat exchanger, and an air stream directed through the heat exchanger (for e.g., by a fan) may remove the heat from the liquid. Although not illustrated in FIG. 2, the TM system 50 may include known devices (such as, for e.g., pumps, valves, heaters, filters, fans, etc.) to condition the heat transfer medium (air, coolant, etc.) and circulate it through the battery system 14.

A control unit 70 may control the operations of the TM system 50 based on received data. Control unit 70 may be a part of a larger control system that controls many operations of the battery system 14 and/or the bus 10 (e.g., battery management system, vehicle control system, etc.), or may be a dedicated system that manages battery cooling. Since bus 10 operates on a known route (e.g., from origin A to known destination B, a known route around a city, airport, etc.), the control unit 70 may receive information on the expected route of the bus 10 (route data 82). The control unit 70 may receive the route data 82 by any known method from any source (external or internal to the bus 10). For example, at the onset of the journey, the driver of the bus 10 may select the destination on a GPS or a navigation system (for example, by selecting or entering the destination address), and the navigation system may provide the route data 82 to the control unit 70. In some embodiments, a bus schedule, preprogrammed into the control unit 70 (or another control system), may provide the route data 82 to the control unit 70. It is also contemplated that the route data 82 may be determined based on a route selected by the bus driver (e.g., from a menu of available options), or that the route data 82 may be transmitted to the bus 10 from a remote source (transit authority office). In some embodiments, the route data may be part of a geo-fencing system for the vehicle where route and traffic data is accessed directly based on the GPS location and vector speed of the vehicle.

When the bus 10 is traversing the route, the control system 70 may receive location data 84. The location data 84 indicates the location of the bus 10 on the route at any particular time, and may be received from the navigation system or another GPS system associated with the bus 10. As the bus 10 is traversing the route, the control unit 70 may also receive information on the condition of the road (road condition data 86), the weather condition (weather condition data 88), and/or the traffic condition (traffic data 92) along the route ahead of the bus 10. That is, when the bus 10 is traversing a section of the route (first section), the control unit 70 may receive data that indicates the expected condition of one or more of the road, weather, and traffic at a section of the route that the bus 10 will soon reach (second section).

Road condition data 86 may include information such as the road surface condition (smooth, rough, etc.), road grade (incline, etc.), typical/recommended speed, etc. at different regions on the route ahead of the location that the bus is currently on. The weather condition data 88 may include information on the expected temperature, chance of precipitation (rain, snow), etc. at different regions of the road at the time when the bus 10 is expected to reach these regions. And, the traffic data 92 may include information on the expected traffic at the different regions at the time when the bus 10 is expected to reach these regions. The road condition data 86 may be determined based on historical data (e.g., saved from previous trips along the route), or may be determined from known data sources such as the General Transit Feed Specification (GTFS). As is known to people of ordinary skill in the art, GTFS is a collection of data files that includes public transportation schedules along with their associated geographic information in a common format. The weather condition data 88 and traffic data 92 may also be received from an external source (such as the weather bureau, transit authority, traffic data collection authority, etc.). It should be noted that, in some embodiments, the control unit 70 may not utilize the weather condition data 88 and/or the traffic data 92. In some embodiments, other data (such as, for e.g., data that indicates the expected number of passenger at different sections of the route) may also be received by the control unit 70 similar to the road, weather, and traffic data.

Based on the received road condition data 86, weather condition data 88, and/or the traffic data 92, the control unit 70 may be aware of the road, weather, and traffic conditions at a stretch of the road ahead of the current location of the bus 10. That is, based on the data received at any current time, the control unit 70 may be aware of the road, weather, and traffic conditions that the bus may encounter at a future time (when the bus reaches that stretch of the road). Using this advance notice, the control unit 70 may control the TM system 50 to cool or heat the battery system 14 to optimize the performance of the battery system 14 when it encounters that stretch of the road. For example, if the bus 10 will need to accelerate to climb a steep grade that is up ahead, the control unit 70 may control the TM system 50 to cool the battery system 14 (in some cases, to a temperature below the minimum threshold temperature of T_{Min}) prior to engaging the steep grade. Precooling the battery system 14 in this manner allows the electric motors of the bus 10 to produce more power while travelling up the steep grade without increasing the battery system temperature above the maximum threshold limit of T_{Max}. In some embodiments, based on the received data, the control unit 70 may change the setpoint temperature of the battery system 14 (i.e., change T_{Max} and/or T_{Min}), and control the TM system 50 to cool/heat the battery system 14 to the setpoint temperature.

Similarly, if the bus 10 will soon have to travel down a long downhill slope, the battery system 14 may be controlled in such a way to maximize acceptance of the regenerative charging that is expected to occur when the bus coasts down the slope. In some embodiments, the control unit 70 may control the TM unit 50 to heat the battery system 14 before coasting down the slope to decrease battery resistance and thus increase regenerative charge acceptance. Alternatively or additionally (to controlling battery temperature), in some embodiments, the regenerative charge acceptance limit (the maximum regenerative current that can be accepted by the battery system 14 at any time) of the battery system 14 may be temporarily increased to accommodate an expected increased regenerative charging. For example, if the road condition data 86 indicates that the bus 10 will have to travel up an incline after it travels down an incline, the control unit 70 may temporarily increase the regenerative charge acceptance limit of the battery system 14 to allow the battery system 14 to receive an increased amount of regenerative charging (than is normally allowed) as the bus 10 travels down the incline. This excess charge may then be used by the bus 10 to travel up the incline without depleting the battery system 14.

In some embodiments, the control unit 70 may use the received weather condition data 88 and/or the traffic data 92, along with the road condition data 86, to control the battery system 14. For example, if the bus 10 will have to soon climb a steep hill, and the weather condition data 88 and/or the traffic data 92 (or passenger data, if received) indicates that the HVAC unit 17 will have to operate on high to keep the passengers comfortable while climbing the hill, the battery system 14 may be precooled to a temperature low enough such that the maximum temperature of the battery will not increase beyond TMax while climbing the hill. In some embodiments, the received weather condition data 88 and/or the traffic data 92 by itself may be used to control the cooling of the battery system 14. For example, the battery system 14 may be precooled to accommodate a possible increase in power consumption due to expected weather, traffic, or passenger conditions.

Although the description above describes the road inclination being used to control the battery system 14, this is only exemplary. In general, any expected road condition data 86, weather condition data 88, traffic data 92, or passenger data may be used to control the battery system 14. For example, if the bus 10 is expected to travel through a rough patch of road (unpaved, etc.), the control system 70 may control the battery system 14 to optimize bus performance when it reaches the rough patch. Further, although the description above describes controlling the cooling (and/or the regenerative charge acceptance limit) of the battery system 14 in anticipation of a road, weather, traffic, or passenger conditions, this is only exemplary. In general, any parameter of the battery system 14 may be controlled to improve the performance of the bus.

In some embodiments, the control unit 70 may control the cooling (or any other parameter) of the battery system 14 before the bus reaches the stretch of the road that the received data pertains to. That is, if data indicating that there is a steep incline on a second stretch of the road is received when the bus 10 is traversing a first stretch of the road (that is upstream of the second stretch), the control unit 70 may begin to control the TM system 50 (i.e., vary the cooling of battery system 14) before the bus reaches the incline. However, this is not a requirement. In some embodiments, the control system 70 may wait to begin varying the cooling when the bus 10 reaches the incline.

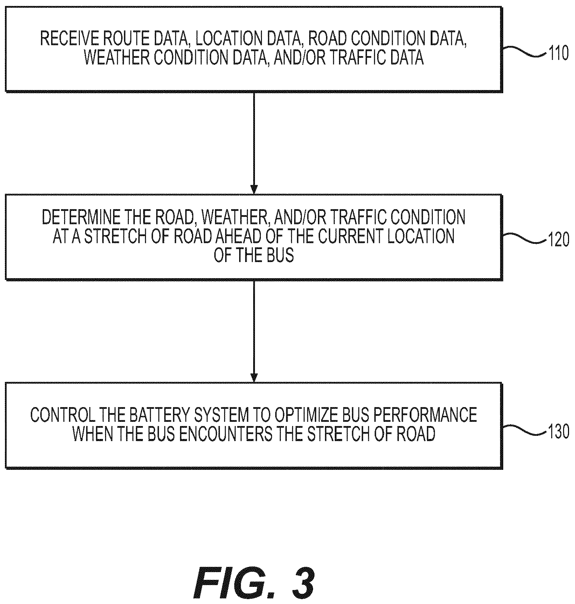

FIG. 3 is a flow chart that illustrates an exemplary method of controlling the battery system 14 using the control unit 70. When the bus 10 is travelling on a route, the control unit 70 receives some or all of route data 82, location data 84, road condition data 86, weather condition data 88, and traffic data 92 (step 110). As indicated previously, the control system 70 may receive this data from any source external or internal to the bus 10. Based on at least some of this received data, the control system 70 determines one or more of the road condition, weather condition, and/or traffic condition at a stretch of road ahead of the current location of the bus 10 (step 120). Based on this determination, the control system 70 may control the battery system 14 to optimize the bus performance when the bus 10 encounters the stretch of road (step 130). Thus, the control unit 70 determines beforehand, the road, weather, and/or traffic condition that the bus may encounter in the future (i.e., at a later time when the bus reaches the stretch of road that the data pertains to), and uses this information to tailor the performance of the battery system 14 to optimize the bus performance at the later time.

In some embodiments, using the information about the future road, weather, and/or traffic condition, the control system 70 may also guide the driver of the bus 10 to operate the bus in a manner that improves the efficiency of the bus over the entire route (rather than the efficiency of the bus at that moment). That is, with reference to FIG. 3, alternative to or in addition to step 130, the control unit 70 may also provide driving feedback to the driver. For example, based on the knowledge that a stretch of road ahead of the bus 10 is inclined and/or curvy for an extended duration (1 mile, 5 miles, etc.), the control unit 70 may prompt the driver to control the acceleration of the bus 10 at the current time so as to conserve energy for future use (when it encounters the inclined/curvy stretch of road). Anticipating the future energy consumption of the bus, and prompting the bus driver to operate the bus in a manner that conserves the energy needed for the anticipated future use, may allow the bus 10 to travel a greater distance before having to be recharged and thus improve efficiency. Similarly, based on the knowledge that the road ahead of an incline that is immediately in front of the bus 10 is a downhill slope, the control unit 70 may indicate to the driver that it is okay to accelerate more while travelling up the incline, since the extra energy consumed in the acceleration can be made up by regeneration when the bus reaches the downhill slope. In some embodiments, the prompts to the driver may be additionally based on the condition (state of charge (SOC), temperature, etc.) of the battery system 14 at the current time. For example, in the example above, the magnitude of acceleration that that the driver is prompted to apply while climbing the incline may also be based on the current SOC of the battery system 14.

The control unit 70 may prompt the driver in any manner. In some embodiments, the prompts may be provided on a display device, or on indicators (lights) positioned in front of the driver. For example, a light may be illuminated to prompt the driver to accelerate or decelerate the bus 10, and the light may turn off when the desired acceleration/deceleration is achieved. It is also contemplated that the prompts may be incorporated into the display of an efficiency gauge of the bus 10. As known to a person of ordinary skill in the art, an efficiency gauge (or ECO gauge) of an EV indicates to the driver, one or more zones for efficient operation of the EV. The control unit 70 may display on the ECO gauge, a zone that improves the efficiency of the bus over the entire route based on expected road and/or weather conditions. Thus, the control unit 70 may guide the driver to operate the bus 10 in a manner that improves the efficiency of the bus over the entire route based on information regarding the road and/or weather condition that the bus may later encounter.

In the description above, using data relating to the future road, weather, and/or traffic conditions, the control unit 70 controls the battery system 14 to optimize the performance of the bus. However, this is only exemplary, and many variations are possible. In general, the control unit 70 may control any system of the bus 10 at a current time to improve the future or overall performance of the bus. In some embodiments, with reference to FIG. 3, based on an expected future event (e.g., future road and/or weather condition) determined at the current time (step 120), the control unit 70 may control the HVAC system 17 to reduce energy consumption when the bus encounters the future event, and thus reduce overall energy consumption of the bus. For example, if the road condition data 86 and weather condition data 88 indicate an upcoming hill when the bus 10 is travelling down an incline, the control unit 70 may control the HVAC system 17 to cool (or heat) the passenger cabin to a temperature (T1) below (or above) a preset temperature (TPreset) at which the passenger cabin is usually maintained. Cooling the cabin below the preset temperature (or heating the cabin above the preset temperature during winter) at the current time while the bus is traveling down the incline (and thus being charged by regenerative charging), will reduce the amount of energy consumption by the HVAC system 17 when the bus 10 later travels up the hill.

The HVAC system 17 uses a significant amount of energy to cool/heat the passenger cabin. This HVAC related energy usage may be especially high at morning roll-out, because the bus 10 may have been parked overnight (for e.g., in the bus depot), and would have normalized its temperature with outside air. Typically, as described previously, when the bus 10 is parked in the depot, it is connected to the utility grid to be charged (e.g., by shop-charging or depot-charging). When the bus 10 is started and/or rolled out in the morning, the HVAC system 17 uses energy stored in the battery system 14 (battery energy) to raise the temperature of the passenger cabin to the preset temperature (T_{Preset}). Depending on the initial temperature of the passenger cabin, a large amount of energy may be needed to initially raise the temperature of the passenger cabin to the preset temperature. After the preset temperature is achieved, less energy is needed to maintain the passenger cabin at the preset temperature.

In some embodiments, rather than using battery energy to heat or cool the preset temperature of the passenger cabin, the HVAC system 17 uses grid power to cool the passenger cabin to the preset temperature while the bus 10 is being shop-charged. That is, the control unit 70 may activate the HVAC system 17 while the bus 10 is still connected to the utility grid for charging, to precondition (i.e., precool or preheat) the passenger cabin to the preset temperature (i.e., T_{Cabin} = T_{Preset}) prior to morning rollout. Using grid power (rather than battery power) for achieving the preset temperature of the passenger cabin relieves the battery system 14 from providing the energy needed to achieve this temperature. This saved energy may be used for propulsion, thus increasing the range and efficiency of the bus 10.

In some embodiments, based on the expected weather conditions (temperature, precipitation, etc.) after rollout, the control unit 70 may precondition the passenger cabin to a temperature (e.g., T1) below (or above) the preset temperature while the bus 10 is still connected to the grid. For example, when the expected ambient temperature after rollout is high, the passenger cabin may be cooled below the preset temperature (i.e., T_{Cabin} = T₁ < T_{Preset}) using grid power. After the bus 10 begins its route, the temperature of the passenger cabin will slowly increase to the preset temperature due to heat transfer with the ambient. When the cabin temperature increases further (i.e., when T_{Cabin} > T_{Preset}), battery power will be used to cool the passenger cabin. However, precooling the cabin to T1 (< T_{Preset}) increases the time before battery power has to be used to cool the cabin. Thus, precooling the passenger cabin to a temperature below the preset temperature, conserves battery power by decreasing the total amount of battery power needed by the HVAC system 17 during the route. The difference in temperature between the precooled temperature and the preset temperature (ΔT = T_{Preset} - T₁) may depend upon the ambient conditions (weather, etc.) and the application (passenger loading, etc.). In general, ΔT may be any value between about 1°C and 5°C.

Although the description above describes using grid power (during charging using power from the utility grid) to run the HVAC system to precondition the passenger cabin prior to rollout, the described concept may be applied to precondition any system of the bus (i.e., by operating the corresponding system of the bus) using grid power as the bus is being changed in order to conserve battery power during operation of the bus. For instance, in some embodiments, the defroster of the bus may be operated using the grid power to preheat the windshield (and other parts of the bus body) prior to rollout. In another example, the battery system of the bus may be preconditioned (e.g., cooled or heated to a predetermined temperature) while the bus is being charged so that the battery system is at a suitable temperature immediately after rollout. In another embodiment, the intelligent transportation system (ITS) of the bus may be operated while the bus is being charged to upload and download data (e.g., to and from the transportation authority) while the bus is being charged. Uploading and downloading data using grid power (data that may otherwise be uploaded/downloaded using battery power when the bus is operating) enables the communication systems of the bus to be operated using grid power, thus conserving battery power during bus operation. The embodiments described above are only exemplary. In general, any system of the bus may be preconditioned using grid power as the bus is charged to conserve battery power during bus operation.

Thus, the control unit of the current disclosure uses advance knowledge of the expected road, weather, traffic, and/or passenger conditions that the bus is likely to encounter along its route and controls the battery system to optimize its performance when the bus encounters the expected condition. It should be noted that, although the battery system is described as being controlled in response to the expected condition, this is only exemplary. In general, in response to expected conditions, any system of the bus 10 may be controlled to improve the performance of the bus 10.

### Equivalents

The foregoing description details presently preferred embodiments of the present invention. Numerous modifications and variations in practice thereof are expected to occur to those skilled in the art upon consideration of these descriptions. Those modifications and variations are intended to be encompassed within the claims appended hereto.

## Claims

1. A method of controlling an electric vehicle (10) operating on a route, comprising:
receiving (110) at a first time, at a control unit (70) of the electric vehicle, data indicative of a condition of a stretch of the route that the electric vehicle will traverse at a second time later than the first time; and
varying (130) a cooling of a battery system (14) of the electric vehicle, using the control unit, based on the received data.

2. The method of claim 1, wherein receiving the data includes receiving data indicative of a road grade of the stretch of the route.

3. The method of claim 2, wherein varying a cooling of the battery system includes increasing the cooling if the road grade indicates that the stretch includes an uphill slope.

4. The method of any of claims 2-3, wherein varying a cooling of the battery system includes decreasing the cooling of the battery system if the road grade indicates that the stretch includes a downhill slope.

5. The method of any of claims 2-4, wherein varying a cooling of the battery system includes heating the battery system based on the received data.

6. The method of any of claims 1-5, further including increasing a regenerative charge acceptance limit of the battery system if the received data indicates that the stretch of the route includes a downhill slope.

7. The method of any of claims 1-6, further including providing instructions to a driver of the electric vehicle, the instructions including driving instructions configured to improve a performance of the electric vehicle as it traverses the stretch of the route.

8. The method of any of claims 1-7, wherein varying a cooling of the battery system includes varying the cooling of the battery system at the first time based on the received data.

9. The method of any of claims 1-8, wherein receiving the data includes receiving data indicative of a road roughness of the stretch of the route.

10. The method of any of claims 1-9, further including receiving at the first time, data indicative of an expected weather condition at the stretch of the route at the second time.

11. The method of any of claims 1-5, further including receiving at the first time, data indicative of an expected traffic condition at a stretch of the route at the second time, wherein varying a cooling of the battery system includes varying the cooling based on both (a) the data indicative of the condition of the stretch of the route, and (b) the expected weather condition at the stretch of the route.

12. The method of any of claims 1-11, wherein varying a cooling of the battery system incudes varying a setpoint temperature of the battery system.

13. A method of controlling an electric vehicle (10), comprising:
charging the electric vehicle by electrically connecting the vehicle to a utility grid; and
operating an HVAC system (17) of the electric vehicle, using power from the utility grid, to heat or cool a passenger cabin of the electric vehicle while the electric vehicle is being charged.

14. The method of claim 13, wherein operating the HVAC system includes heating the passenger cabin to a preselected temperature using power from the utility grid.

15. The method of claim 13, wherein operating the HVAC system includes cooling the passenger cabin to a preselected temperature using power from the utility grid.
